# EUROPEAN PATENT SPECIFICATION

(11) **EP 1 565 038 B1**
(45) Date of publication and mention of the grant of the patent: **17.06.2009**
(21) Application number: 05006499.7
(22) Date of filing: 05.12.2001
(51) Int. Cl.: H05B 3/26, H05B 1/02, A47J 27/21, H01H 37/04, H05B 3/82

(54) **Liquid heating vessels**
Heizgefässe für Flüssigkeiten
Récipients de chauffage de liquide

(30) Priority: 06.12.2000 GB 0029771
(43) Date of publication of application: 17.08.2005
(62) Divisional of application: 01310162.1
(73) Proprietor: STRIX LIMITED, Ronaldsway, Isle of Man IM9 2RG (GB)
(72) Inventor: Taylor, John Crawshaw, Castletown, Isle of Man IM9 1HA (GB); Scott, Michael James, Port St. Mary, Isle of Man IM9 5PH (GB); Donnelly, Vernon James, Braddan, Isle of Man IM2 1NL (GB)
(74) Representative: Samuels, Adrian James

(56) References cited:
- EP-A- 0 063 665
- EP-A- 1 048 255
- WO-A-00/24300
- WO-A-95/34187
- WO-A-99/63789
- GB-A- 2 285 710
- GB-A- 2 308 537
- US-A- 6 080 968
- US-A- 6 153 859

## Description

The present invention relates to liquid heating vessels, and in particular to liquid heating vessels having sheathed heating elements attached to the underside of the base of the vessel to heat liquid in the vessel.

An example of such a liquid heating vessel is disclosed in EP-A-636622 (SEB) in the arrangement disclosed in that document, the heating element is mounted to the base of the liquid heating vessel via a heat diffusion plate of aluminium or a similar highly conductive metal. The heat diffusion plate acts to diffuse heat from the heating element over the base of the heating vessel.

In typical liquid heating vessels a thermally sensitive control is provided so as to prevent the heater overheating in the event that the vessel is switched on dry or boils dry. In arrangements as described above, a thermally sensitive control is also mounted on the heat diffusion plate.

The Applicants have realised that, in fact, the effect of the heat diffusion plate is relatively limited, acting, in practice, to provide limited radial diffusion of heat from the heating element.
Accordingly, it may effectively be dispensed with. However, means must be provided for permitting effective sensing of overheating of the heater in the event of a dry boil or switch on dry situation.

The Applicants have sought to provide such an arrangement, and from a first aspect the present invention provides a heated base in or for a liquid heating vessel as claimed in claim 1.

Thus in accordance with the invention heat is transferred directly into the base of the liquid heating vessel without the need for a heat diffusion plate. A heat conduction member arranged preferably over and in good thermal contact with the heating element, and also in thermal contact with the vessel base, allows heat to be conducted to a thermally sensitive control which can sense when the heater is overheating. It is important that the heat conduction member is in thermal contact both with the heating element and with the base of the heating vessel since during normal operation of the heater, the vessel base will act to keep the temperature of the heat conduction member plate at a lower temperature thereby preventing accidental operation of a control, mounted thereon during heating of liquid in the vessel.

Preferably, the heat conduction member comprises a strip or plate mounted over a portion of the heating element. The plate is preferably of a material having a high thermal conductivity, for example, of aluminium, copper, or alloys thereof.

The conduction member plate need only engage a relatively small portion of the heating element in order to perform its function. Accordingly, in a preferred embodiment the heat conduction member need only engage a limited circumferential extent of the element. Typically, this will be less than 90°, preferably around 45° circumferentially of the heating element.

The conduction member preferably extends over at least half the radial width of the portion of the heating element, and most preferably over the entire width of the portion. Indeed, in a preferred embodiment, the conduction member extends radially beyond the element and is attached to the vessel base beyond the element.

The conduction member may be provided with suitable locating means for assisting its accurate location on the heater and vessel base. The locating means may engage with the heating element and/or the base of the vessel itself. In the preferred embodiment, the vessel base is dish shaped, and the conduction member extends at least partially up the side of the dish for location.

A plurality of heat conduction members may be provided for receiving a plurality of thermal control means. In a preferred embodiment a single conduction member comprises mounting locations for a plurality of thermally sensitive control means.

In the preferred embodiment, the arrangement is adapted for use with a thermally sensitive control having a pair of thermally sensitive actuators. An example of such a control is the Applicant's U17 or U18 control. In this embodiment, the thermal conduction member preferably extends across the base of the heating vessel and engage with respective opposed portions of the heating element. The respective mounting locations for the control actuators are, therefore, linked by a central bridge of material.

The conduction member is apertured both to save material costs and to manage the heat flow within the member. For example the conduction member is provided with apertures, eg slots, extending around the actuator mounting locations so as to prevent heat transfer into the central region of the vessel base, which is unnecessary, and concentrate heat in the region of the actuator mounting locations.

The provision of apertures around a mounting location for a thermally sensitive actuator manages the heat flow around that area and may also have application for example in standard diffuser plate heater constructions.

The apertures are preferably slots and in one embodiment may be arcuate.

The heat conduction member of the invention may also be provided with means for mounting a control thereon. Accordingly, the heat conduction member may be provided with one or more tabs or other mounting locations for a control.

Preferably the heat conduction member is brazed or soldered in position on the element and heating vessel base. In order to facilitate this procedure, the conduction plate is preferably provided with one or more apertures which allows the escape of fluxes etc. during the bonding process.

In a preferred embodiment, the element and the conduction member may be coated with solder paste and located together on the vessel base and the assembly then heated to solder the plate and element in position.

The element and the conduction member could be form locked together eg by pressing to assist in location.

The element is preferably formed such that its height is less than its width. Preferably, it is generally triangular or trapezoidal in section and is provided with a flange at its base to increase its area of contact with the vessel base.

Preferably the sheath of the heating element is of aluminium, and most preferably the wall thickness of the sheath is greater than 0.75mm, more preferably around 1mm to accommodate deformation in creating a flange as described above.

The invention also extends to a liquid heating vessel comprising a heated base in accordance with the invention.

The base member may be a separate component mounted in the base of the vessel, which may be plastics. Alternatively the base member may be an integral part of the vessel body.

The base member is preferably made from a material with a low thermal conductivity such as stainless steel.

In certain embodiments of the invention, the heating element may be mounted to a generally planar portion of the base so as to protrude therefrom.

In other embodiments, however, the base may be formed with a groove which receives the heating element, and the conduction member be arranged across the top of the heating element. Preferably the base is formed with a peripheral step which receives the heating element.

Preferably the groove or step and the element are sized such that the conduction member lies flush with the adjacent region of the base. This allows a substantially planar conduction member to be used.

In one embodiment, the conduction member extends substantially around the whole groove or step, although an opening may be provided to allow the cold tails of the heating element to project through.

Some preferred embodiments of the invention will now be described, by way of example only, with reference to the accompanying drawings in which:
Figure 1 shows a plan view of a heated base in accordance with the invention;
Figure 2 shows a sectional view along the line II-II of Figure 1;
Figure 3 shows a perspective view of the heat conduction member shown in Figures 1 and 2;
Figure 4 shows a plan view of the conduction member of Figure 3;
Figure 5 shows a sectional view along the line V-V in Figure 4;
Figure 6 shows a side view of a conduction member shown in Figure 4;
Figure 7 shows schematically an alternative element configuration;
Figure 8 shows a sectional view of an exemplary base arrangement provided for illustrative and comparative purposes;
Figure 9 shows an underneath plan view of the arrangement of Figure 8, but with the control removed; and
Figure 10 shows a sectional view of a yet further illustrative base arrangement.

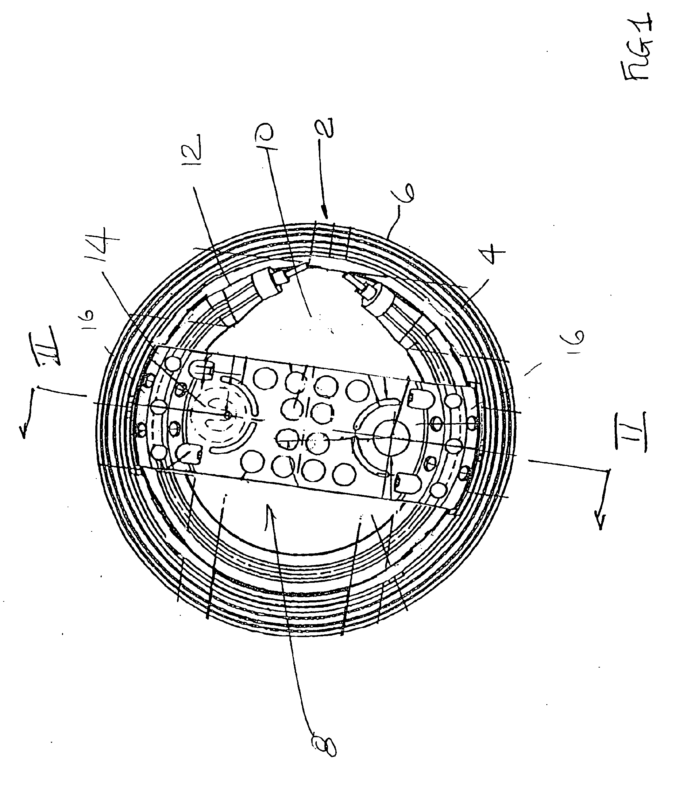

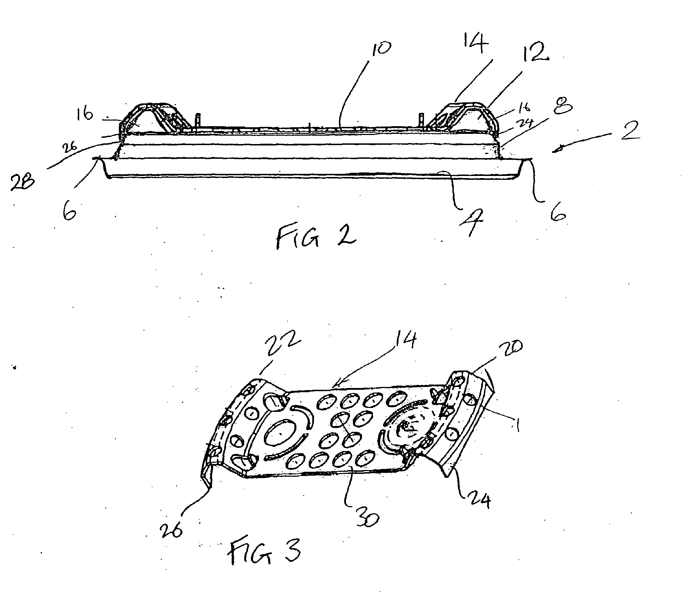

With reference to Figures 1 and 2, a heated base 2 for mounting in the base of a plastics or metallic liquid heating vessel (not shown) comprises a stainless steel base member 4 having a mounted flange 6 for mounting in the vessel body.

The underside 8 of the base member 4 is dished, having a flat bottom surface 10. A generally triangular cross-sectioned annular aluminium sheathed heating element 12 is mounted around the periphery of the underside of the base member 4. A generally rectangular heat conduction member 14 is also mounted to the undersurface 10, extending completely across the undersurface 10 and over and around opposed portions 16 of the heating element 12.

The heating element 12 is generally triangular in section and is formed with an aluminium sheath arranged around a heating wire and electrical insulating material in a known manner. Both the element 12 and the heater conduction member 14 are soldered onto the flat undersurface 10 as will be described further below.

Turning now to the heat conduction member 14, this is shown in greater detail in Figures 3 to 6. The heat conduction member 14 is formed as a strip of a thermally highly conductive material such as aluminium or copper or alloys thereof. In this particular embodiment it is formed of an aluminium strip about 1 mm in thickness.

The conduction member comprises two end portions 20, 22 which engage over the heating element 12. The end portions 20, 22 are, therefore, formed into a shaped generally complementary to that of the heating element. The end regions 20, 22 are provided with respective locating lips 24, 26 which as can be seen in Figure 2 extend down over the side wall 28 of the underside 8 of the base member 4, thereby assisting in locating the conduction member 14 on the base member 4.

The central region 30 of the heat conduction member 14 is provided with mounting locations 32, 34 for receiving bimetallic actuators 36 of a thermally sensitive control for the liquid heating vessel. In this particular embodiment, the arrangement is intended for use with one of the Applicants U17 or U18 series of controls, whose mode of operation is described in detail in WO95/34187. Such controls comprise a pair of spaced apart bimetallic actuators 36 which sense the temperature of the base of a liquid heating vessel and operate in the event that they sense too high a temperature in order to interrupt the power supply to the heater of the vessel. The position of one such actuator 36 is shown in dotted line in figures for illustrative purposes.

The mounting locations 32, 34 comprise respective apertures 38, 40 in the conduction member 14, surrounded by respective arcuate apertures 42, 44. The central apertures 38, 40 allow the satisfactory seating of the actuators 36 on the heat conduction member 14. The arcuate apertures 42, 44, serve to restrict the flow of heat from the mounting locations into the centre 30 of the conduction member 14 thereby assuring a faster response time in an overheat situation.

It will also be seen that the thermally conductive member 14 is provided with a number of apertures 50 arranged over the rest of its surface. This acts to reduce material costs and, furthermore, will allow the escape of fluxes etc. during the manufacturing process as will be described further below.

The conduction member 14 is also provided with mounting tabs 54 which may be used to mount the control to the conduction plate, thereby avoiding the need for any additional means of mounting for the control to the base member.

The conduction member 14 and the element 12 are soldered to the underside 8 of the base member 4. In particular, the surface of the conduction plate 14 which faces the vessel base 4, and the element 14 may be coated with a suitable solder paste, the two components then assembled together onto the vessel base, which can then be heated to an appropriate temperature to melt the solder. Fluxes and excess solder can escape through the apertures 50 provided in the conduction plate 14 so as to provide a firm connection. Furthermore, the apertures 50 in the respective end regions 20, 22 of the heat conduction member allow fluxes to escape from between the heat conduction member 14 and the element 12.

In use, the base 2 is mounted in the bottom of a liquid heating vessel via its mounting flange 6 in a conventional manner. A thermally sensitive control e.g. an Applicant's U17 or U18 series control is then mounted to the heat conduction plate via the mounting lugs 54. When liquid is being heated in the vessel, the temperature of the mounting locations 32, 34 for the bimetallic actuators 36 of the thermally sensitive control will be kept relatively cool due the thermal contact of the conduction member 14 with the base member 4 in that region. However, in the event that the liquid heating vessel boils dry or is switched on without any liquid in it, heat will be conducted from the heating element 12 into the mounting location for the bimetals through the heat conduction member 14, and there will be no cooling effect through the base member 4. In due course, therefore, the mounting locations will reach a temperature sufficiently high to operate the bimetallic actuators 36 which will then act to disconnect the power supply to the heater.

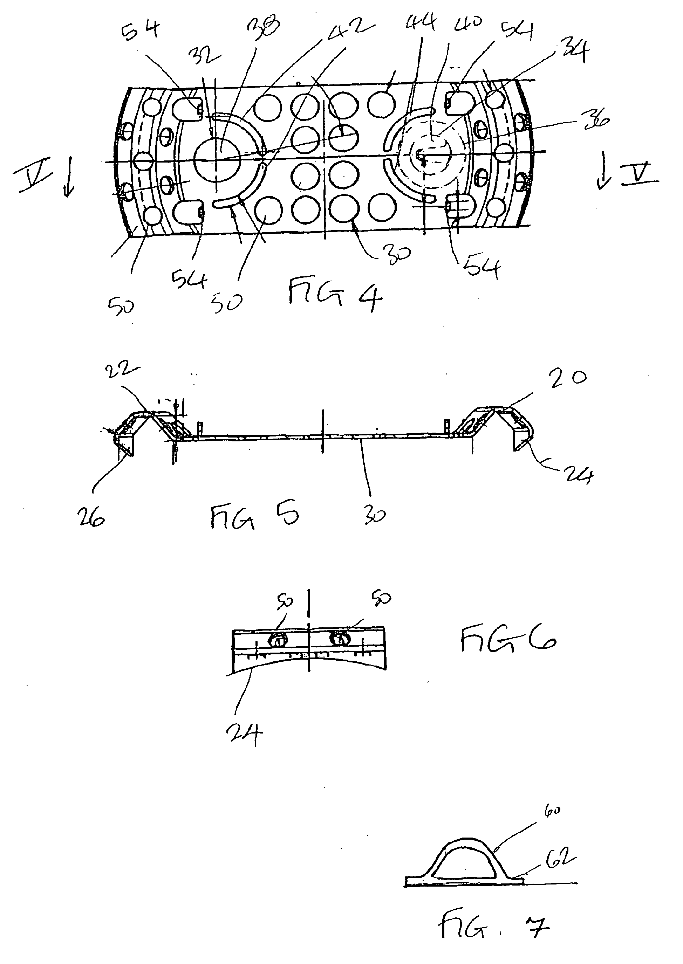

It will be appreciated that various modifications can be made to the arrangement shown in the Figures 1 to 6 without departing from the scope of the invention. For example, the heat conduction member may be adapted merely to receive a single bimetallic actuator or other form of control. The invention is not limited to use with a U17 or U18 type control. Furthermore, the particular shape of the element may vary from that shown. For example, Figure 7 shows an alternative geometry for the heater. In this embodiment, the element 60 is formed with a mounting flange 62 at its base, to increase the surface area of contact with the base of the vessel. Typically the sheath will be made of aluminium, again typically with walls about 1 mm thick which will accommodate the pressing necessary to produce the mounting flange 62.

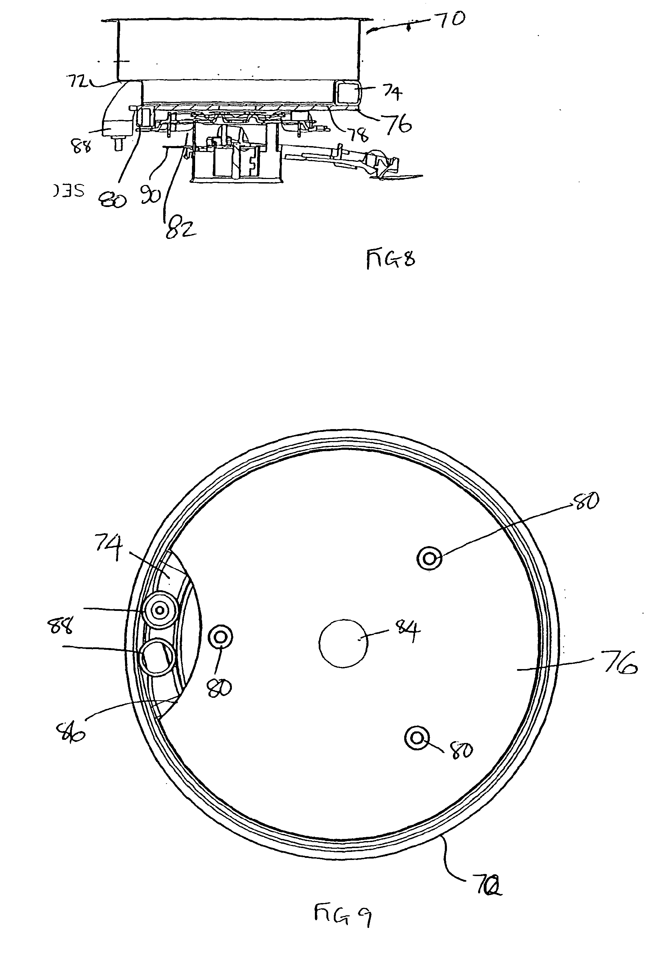

The shape of the base member may also be different to that shown in Figures 1 to 6. With reference to Figures 8 and 9, the base member 70 is deeper than that of the earlier described embodiment, and is provided with a peripheral step 72. An annular sheathed heating element 74 is brazed or otherwise secured into the step 72, as shown, preferably along both contact surfaces.

A planar conduction member 76 of high thermal conductivity material is mounted over the lower surface of the heating element 74 and is brazed to the lowermost surface 78 of the base member 70 and also to the element 74. Although the conduction member shown does not fall within the scope of the invention, this base member arrangement may be incorporated in accordance with the invention as defined in claim 1. The conduction member is provide with studs 80 for mounting a control unit 84. The control unit 18 illustrated in this embodiment is one of the Applicant's U18 control units. As mentioned above, the control unit comprises a pair of bimetallic actuators which, when the control is mounted in position, are arranged in good thermal contact with the conduction member 76.

As can be seen most clearly from Figure 9, the conduction member 76 is circular and covers substantially the entire base 70 apart from a central aperture 84 and a peripheral cut-out 86. The cut-out 86 allows the cold tails 88 of the heating element 74 to project below the conduction member 76 for connection to terminals 90 on the control unit 82.

This arrangement works in the same manner as the earlier embodiment, with heat being transferred to the actuators of the control unit 82 in an overheat situation through the conduction member 76, but heat entering the base 70 directly from the heating element 74 through the walls of the step 72 of the base 70.

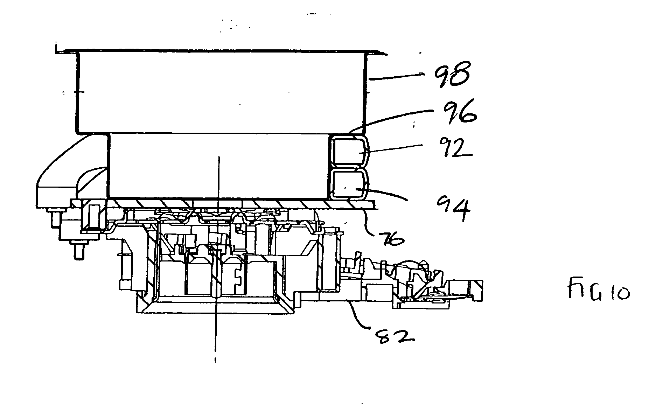

Figure 10 shows a further base arrangement which may be incorporated in accordance with the invention.

This is similar in construction and operation to the arrangement of Figure 8 except that in this base arrangement, two heating elements, 92, 94 are arranged in a step 96 of a base member 98. The upper element 92 is typically a higher power, main, heating element while the lower element 94 is a lower power, simmer, element. The two elements 92, 94 are brazed into the step 96 and preferably to each other.

It will be understood that the conduction member 76 in the last two described arrangements may incorporate the various preferred features of the conduction member of the first embodiment in accordance with the invention. For example, they may extend only partially around the heating element(s). It may also incorporate features facilitating its attachment to the base member, for example small stand offs on its base facing surface to facilitate the distribution of braze during a brazing process.

Also, the invention may be applied to all manner of liquid heating vessels, for example kettles, coffee makers, deep fat fryers and so on.

## Claims

1. A heated base in or for a liquid heating vessel comprising a base member (4), an electric heating element (12 ; 60) and a mounting location (32, 34) for a thermally sensitive actuator (36), said location (32, 34) being provided on a thermally conductive member (14) which is in close thermal contact with a portion of the element (12 ; 60) and with the base member (4), and which is provided with one or more apertures (42, 44) or thinned regions extending at least partially around the mounting location (32, 34).

2. A base as claimed in claim 1, wherein the thermally conductive member (14) is made of a material having a high thermal conductivity such as aluminium, copper, or alloys thereof.

3. A base as claimed in claim 1 or 2, wherein the thermally conductive member (14) is provided with locating means.

4. A base as claimed in any preceding claim, wherein said mouting location (32, 34) is one of a pair of spaced apart mounting locations (32, 34) provided on the thermally conductive member (14).

5. A base as claimed in any preceding claim wherein the thermally conductive member (14) also comprises means for mounting a control thereon.

6. A base as claimed in claim 5, wherein said mounting means comprises one or more tabs (54).

7. A base as claimed in any preceding claim wherein the thermally conductive member (14) is formed as a strip.

8. A base as claimed in any preceding claim wherein at least one thermally sensitive actuator (36) or a thermally sensitive control is mounted in the mounting location (32, 34).

9. A base as claimed in any preceding claim, wherein the thermally conductive member (14) is adapted to receive one or more bimetallic actuators (36) of a thermally sensitive control means.

10. A base as claimed in any preceding claim, wherein a sheathed electric heating element (12 ; 60) is bonded directly to the underside of a base member (4) of the vessel for heating liquid contained in the vessel and wherein the thermally conductive member (14) extends arranged over, and in close thermal contact with, a portion of the sheathed heating element (12 ; 60), and is also arranged in close thermal contact with a portion of the base member (4) of the vessel.

11. A base as claimed in claim 10, wherein the thermally conductive member (14) comprises a strip or plate mounted over a portion of the heating element (12 ; 60).

12. A base as claimed in claim 10 or 11, wherein the thermally conductive member (14) engages only a relatively small length of the heating element (12 ; 60).

13. A base as claimed in claim 10, 11, or 12, wherein the thermally conductive member (14) engages less than 90°, preferably around 45°, circumferentially of the heating element (12 ; 60).

14. A base as claimed in any of claims 10 to 13, wherein the thermally conductive member (14) extends over at least half the radial width of the heating element (12 ; 60), and most preferably over the entire width of the element (12 ; 60).

15. A base as claimed in any of claims 10 to 14, wherein the thermally conductive member (14) extends radially beyond the element (12 ; 60) and is attached to the base member (4) beyond the element (12 ; 60).

16. A base as claimed in any of claims 10 to 15, wherein the thermally conductive member (14) is brazed or soldered in position on the element (12 ; 60) and base member (4).

17. A base as claimed in claim 16, wherein the element (12 ; 60) is also brazed or soldered onto the base member (4).

18. A base as claimed in any preceding claim, wherein the element (12 ; 60) is generally annular, extending around the periphery of the base.

19. A base as claimed in any preceding claim, wherein the element (12 ; 60) is formed such that its height is less than its width.

20. A base as claimed in any preceding claim, wherein the element (12 ; 60) is generally triangular or trapezoidal in section.

21. A base as claimed in any preceding claim, wherein the element (60) is provided with a flange (62) at its base to increase its area of contact with the base.

22. A base as claimed in any preceding claim, wherein the base is formed with a groove which receives the heating element.

23. A base as claimed in claim 22, wherein the base member is formed with a peripheral step which receives the heating element.

24. A base as claimed in claim 22 or 23, wherein the thermally conductive member (14) is arranged across the top of the heating element (12 ; 60).

25. A base as claimed in claim 24, wherein the groove or step and the element are sized such that the conductive member lies flush with the adjacent region of the base member.

26. A base as claimed in any preceding claim, wherein the base is of stainless steel.

27. A liquid heating vessel comprising a heated base as claimed in any preceding claim, wherein the base member (4) is a separate component mounted in the base of the vessel.

28. A liquid heating vessel as claimed in claim 27, wherein the body of the liquid heating vessel is of plastics.

## Patentansprüche

1. Heizbasis in einem oder für einen Flüssigkeitsheizgefäß, umfassend ein Basiselement (4), ein elektrisches Heizelement (12, 60) und eine Befestigungsstelle (32, 34) für einen wärmeempfindlichen Auslöser (36), wobei die Stelle (32, 34) auf einem wärmeleitfähigen Element (14) vorgesehen ist, welches in engem Wärmekontakt mit einem Teilbereich des Elements (12, 60) und mit dem Basiselement (4) ist und welches mit einer oder mehrere Öffnungen (42, 44) oder dünner-werdenden Bereichen ausgestattet ist, die sich wenigstens teilweise um die Befestigungsstelle (32, 34) herum erstrecken.

2. Basis nach Anspruch 1, wobei das wärmeleitfähige Element (14) aus einem Material mit einer hohen Wärmeleitfähigkeit, wie Aluminium, Kupfer, oder Legierungen davon, hergestellt ist.

3. Basis nach Anspruch 1 oder 2, wobei das wärmeleitfähige Element (14) mit Positionierungsmitteln vorgesehen ist.

4. Basis nach einem der vorangehenden Ansprüche, wobei die Befestigungsstelle (32, 34) eine aus einem Paar von auseinander beabstandeten Befestigungsstellen (32, 34) ist, die auf dem wärmeleitfähigen Element (14) vorgesehen sind.

5. Basis nach einem der vorangehenden Ansprüche, wobei das wärmeleitfähige Element (14) ferner ein Mittel zur Befestigung einer Steuerung/Regelung darauf umfasst.

6. Basis nach Anspruch 5, wobei das Befestigungsmittel eine oder mehrere Laschen (54) umfasst.

7. Basis nach einem der vorangehenden Ansprüche, wobei das wärmeleitfähige Element (14) wie ein Streifen geformt ist.

8. Basis nach einem der vorangehenden Ansprüche, wobei wenigstens ein wärmeempfindlicher Auslöser (36) oder eine wärmeempfindliche Steuerung/Regelung in der Befestigungsstelle (32, 34) befestigt ist.

9. Basis nach einem der vorangehenden Ansprüche, wobei das wärmeleitfähige Element (14) angeordnet ist, einen oder mehrere Bimetallauslöser (36) eines wärmeempfindlichen Steuer-/Regelmittels aufzunehmen.

10. Basis nach einem der vorangehenden Ansprüche, wobei ein ummanteltes elektrisches Heizelement (12, 60) direkt mit der Unterseite eines Basiselements (4) des Gefäßes verbunden ist, zum Heizen der in dem Gefäß befindlichen Flüssigkeit, und wobei das wärmeleitfähige Element (14) sich angeordnet über und in engem Wärmekontakt mit einem Teilbereich des ummantelten Heizelements (12, 60) erstreckt, und mit einem Teilbereich des Basiselements (4) des Gefäßes ebenfalls in engem Wärmekontakt angeordnet ist.

11. Basis nach Anspruch 10, wobei das wärmeleitfähige Element (14) einen Streifen oder eine Platte, montiert über einen Teilbereich des Heizungselements (12, 60), umfasst.

12. Basis nach Anspruch 10 oder 11, wobei das wärmeleitfähige Element (14) nur eine verhältnismäßig kleine Länge des Heizelements (12, 60) erfasst.

13. Basis nach Anspruch 10, 11 oder 12, wobei das wärmeleitfähige Element (14) weniger als 90°, vorzugsweise ungefähr 45°, vom Umfang des Heizelements (12, 60) erfasst.

14. Basis nach einem der Ansprüche 10 bis 13, wobei das wärmeleitfähige Element (14) sich über wenigstens die Hälfte der radialen Breite des Heizelements (12, 60) und meist vorzugsweise über die gesamte Breite des Elements (12, 60) erstreckt.

15. Basis nach einem der Ansprüche 10 bis 14, wobei das wärmeleitfähige Element sich radial über das Element (12, 60) hinaus erstreckt, und an das Basiselement (4) über das Element hinaus (12, 60) befestigt ist.

16. Basis nach einem der Ansprüche 10 bis 15, wobei das wärmeleitfähige Element (14) auf dem Element (12, 60) und Basiselement (4) hart- oder weichgelötet ist.

17. Basis nach Anspruch 16, wobei das Element (12, 60) ebenfalls auf dem Basiselement hart- oder weichgelötet ist.

18. Basis nach einem der vorangehenden Ansprüche, wobei das Element (12, 60) im Allgemeinen ringförmig ist und sich um den Rand der Basis herum erstreckt.

19. Basis nach einem der vorangehenden Ansprüche, wobei das Element (12, 60) derart gebildet ist, dass seine Höhe weniger als seine Breite beträgt.

20. Basis nach einem der vorangehenden Ansprüche, wobei das Element (12, 60) im Allgemeinen einen dreieckigen oder trapezförmigen Profilquerschnitt hat.

21. Basis nach einem der vorangehenden Ansprüche, wobei das Element (60) an seiner Basis mit einem Flansch (62) vorgesehen ist, zur Erhöhung seines Kontaktbereichs mit der Basis.

22. Basis nach einem der vorangehenden Ansprüche, wobei die Basis mit einer Fuge gebildet ist, welche das Heizelement aufnimmt.

23. Basis nach Anspruch 22, wobei das Basiselement mit einem peripheren Abschnitt gebildet ist, welcher das Heizelement aufnimmt.

24. Basis nach Anspruch 22 oder 23, wobei das wärmeleitfähige Element (14) quer über dem Heizelement (12, 60) angeordnet ist.

25. Basis nach Anspruch 24, wobei die Fuge oder der Abschnitt und das Element derart ausgelegt sind, dass das leitfähige Element mit dem benachbarten Bereich des Basiselements eben anliegt.

26. Basis nach einem der vorangehenden Ansprüche, wobei die Basis aus Edelstahl ist.

27. Flüssigkeitsheizgefäß umfassend eine Heizbasis nach einem der vorangehenden Ansprüche, wobei das Basiselement (4) ein separates Teil ist, das in der Basis des Gefäßes befestigt ist.

28. Flüssigkeitsheizgefäß nach Anspruch 27, wobei der Körper des Flüssigkeitsheizgefäßes aus Kunststoff ist.

## Revendications

1. Base chauffée dans ou pour une cuve de chauffage de liquide, comprenant un élément de base (4), un élément chauffant électrique (12 ; 60) et un emplacement de montage (32, 34) pour un dispositif d'actionnement thermosensible (36), ledit emplacement (32, 34) étant aménagé sur un élément thermoconducteur (14) qui est en contact thermique étroit avec une partie de l'élément (12 ; 60) et avec l'élément de base (4), et qui est pourvu d'une ou plusieurs ouvertures (42, 44) ou régions amincies s'étendant au moins partiellement autour de l'emplacement de montage (32, 34).

2. Base selon la revendication 1, dans laquelle l'élément thermoconducteur (14) est formé d'un matériau ayant une conductibilité thermique élevée, tel que l'aluminium, le cuivre ou leurs alliages.

3. Base selon la revendication 1 ou 2, dans laquelle l'élément thermoconducteur (14) est muni de moyens de positionnement.

4. Base selon une quelconque des revendications précédentes, dans laquelle ledit emplacement de montage (32, 34) est l'un de deux emplacements de montage espacés (32, 34) aménagés sur l'élément thermoconducteur (14).

5. Base selon l'une quelconque des revendications précédentes, dans laquelle l'élément thermoconducteur (14) comprend également un moyen pour y monter une commande.

6. Base selon la revendication 5, dans laquelle ledit moyen de montage comprend une ou plusieurs pattes (54).

7. Base selon l'une quelconque des revendications précédentes, dans laquelle l'élément thermoconducteur (14) se présente sous la forme d'une bande.

8. Base selon l'une quelconque des revendications précédentes, dans laquelle au moins un dispositif d'actionnement thermosensible (36) ou une commande thermosensible est monté(e) dans l'emplacement de montage (32, 34).

9. Base selon l'une quelconque des revendications précédentes, dans laquelle l'élément thermoconducteur (14) est à même de recevoir un ou plusieurs dispositifs d'actionnement bimétalliques (36) d'un moyen de commande thermosensible.

10. Base selon l'une quelconque des revendications précédentes, dans laquelle un élément chauffant électrique gainé (12 ; 60) est lié directement au côté inférieur d'un élément de base (4) de la cuve pour chauffer le liquide contenu dans la cuve et dans laquelle l'élément thermoconducteur (14) s'étend par-dessus et en contact thermique étroit avec une partie de l'élément chauffant gainé (12 ; 60) et est également aménagé
en contact thermique étroit avec une partie de l'élément de base (4) de la cuve.

11. Base selon la revendication 10, dans laquelle l'élément thermoconducteur (14) comprend une bande ou une plaque montée sur une partie de l'élément chauffant (12 ; 60).

12. Base selon la revendication 10 ou 11, dans laquelle l'élément thermoconducteur (14) ne s'engrène que sur une longueur relativement petite de l'élément chauffant (12 ; 60).

13. Base selon la revendication 10, 11 ou 12, dans laquelle l'élément thermoconducteur (14) s'engrène sur moins de 90 °, de préférence aux environs de 45 °, sur la circonférence de l'élément chauffant (12 ; 60).

14. Base selon l'une quelconque des revendications 10 à 13, dans laquelle l'élément thermoconducteur (14) s'étend sur au moins la moitié de la largeur radiale de l'élément chauffant (12 ; 60), mieux encore, sur toute la largeur de l'élément (12 ; 60).

15. Base selon l'une quelconque des revendications 10 à 14, dans laquelle l'élément thermoconducteur (14) s'étend radialement au-delà de l'élément (12 ; 60) et est relié à l'élément de base (4) au-delà de l'élément (12 ; 60).

16. Base selon l'une quelconque des revendications 10 à 15, dans laquelle l'élément thermoconducteur (14) est brasé ou soudé en position sur l'élément (12 ; 60) et l'élément de base (4).

17. Base selon la revendication 16, dans laquelle l'élément (12 ; 60) est également brasé ou soudé sur l'élément de base (4).

18. Base selon l'une quelconque des revendications précédentes, dans laquelle l'élément (12 ; 60) est en général annulaire, s'étendant autour de la périphérie de la base.

19. Base selon l'une quelconque des revendications précédentes, dans laquelle l'élément (12 ; 60) est formé de sorte que sa hauteur soit inférieure à sa largeur.

20. Base selon l'une quelconque des revendications précédentes, dans laquelle l'élément (12 ; 60) est en général de section triangulaire ou trapézoïdale.

21. Base selon l'une quelconque des revendications précédentes, dans laquelle l'élément (60) est muni d'une bride (62) au niveau de sa base pour augmenter sa surface de contact avec la base.

22. Base selon l'une quelconque des revendications précédentes, dans laquelle la base est formée avec une rainure qui reçoit l'élément chauffant.

23. Base selon la revendication 22, dans laquelle l'élément de base est formé avec un gradin périphérique qui reçoit l'élément chauffant.

24. Base selon la revendication 22 ou 23, dans laquelle l'élément thermoconducteur (14) est aménagé en travers du sommet de l'élément chauffant (12 ; 60).

25. Base selon la revendication 24, dans laquelle la rainure ou le gradin et l'élément sont calibrés de sorte que l'élément conducteur se trouve de niveau avec la région adjacente de l'élément de base.

26. Base selon l'une quelconque des revendications précédentes, dans laquelle la base est en acier inoxydable.

27. Cuve de chauffage de liquide comprenant une base chauffée selon l'une quelconque des revendications précédentes, dans laquelle l'élément de base (4) est un composant séparé monté dans la base de la cuve.

28. Cuve de chauffage de liquide selon la revendication 27, dans laquelle le corps de la cuve de chauffage de liquide est en matière plastique.
